# EUROPEAN PATENT SPECIFICATION

(11) **EP 0 446 182 B1**
(45) Date of publication and mention of the grant of the patent: **04.05.1994**
(21) Application number: 91830033.6
(22) Date of filing: 05.02.1991
(51) Int. Cl.: G01M 3/26

(54) **Method and equipment for testing the seals in the supply-exhaust system of an internal combustion engine with fuel injection for motor vehicles**
Vorrichtung und Verfahren zum Prüfen der Dichtungen von Einlass-Abgasanlagen eines Verbrennungsmotors mit Kraftstoffeinspritzung für Kraftfahrzeugen
Procédé et appareil d'essai des joints d'étanchéité d'un système d'admission et d'échappement d'un moteur à combustion interne à injection de carburant pour véhicules à moteur

(30) Priority: 22.02.1990 IT 6712990
(43) Date of publication of application: 11.09.1991
(73) Proprietor: FIAT AUTO S.p.A., 10135 Torino (IT)
(72) Inventor: Carnevali, Luigi, I-10091 Apignano (Torino) (IT)
(74) Representative: Gerbino, Angelo

(56) References cited:
- DE-A- 1 810 364
- DE-A- 2 703 730
- DE-A- 2 905 197
- NL-A- 7 410 581
- US-A- 2 625 033
- US-A- 3 756 072
- US-A- 3 852 996
- PATENT ABSTRACTS OF JAPAN, vol. 11, no. 22 (P-538)[2469], 21st January 1987; & JP-A-61 196 132

## Description

The present invention relates in general to the supply-exhaust systems of internal combustion engines with fuel injection for motor vehicles.

As is well known, such a system includes an inlet pipe with an associated air-flow detector operatively associated with a system for controlling the fuel injection unit, an exhaust pipe, and inlet and exhaust valve means which control communication between these pipes and the cylinders of the engine. During the assembly of the engine or the repair of the vehicle, there is a problem in testing whether or not the supply-exhaust system leaks as a result of the incorrect assembly of the sealed connections between its components, of any anomalies in the manufacture of the components themselves, or of incidental operating problems. The presence of leaks can actually jeopardise the even running of the engine, particularly as regards the supply portion of the system. In fact, any leaks in that portion would adversely affect the operation of the air-flow detector associated with the inlet pipe and consequently the operation of the injection unit controlled thereby. In this event, the fuel-air mixture admitted would inevitably be wrong and this would prejudice the correct operation of the engine.

The object of the present invention is to provide a method which can be effected simply and cheaply in order quickly and effectively to test the seals and easily to locate any leaks in the supply-exhaust system of an internal combustion engine with fuel injection for motor cars.

The method according to the invention is given in Claim 1.

A further subject of the invention is equipment for performing the method according to claim 6.

The equipment according to the invention is simple and cheap to produce and convenient and practical in use, which enables it to be used both on production lines and in maintenance centres for injection engines.

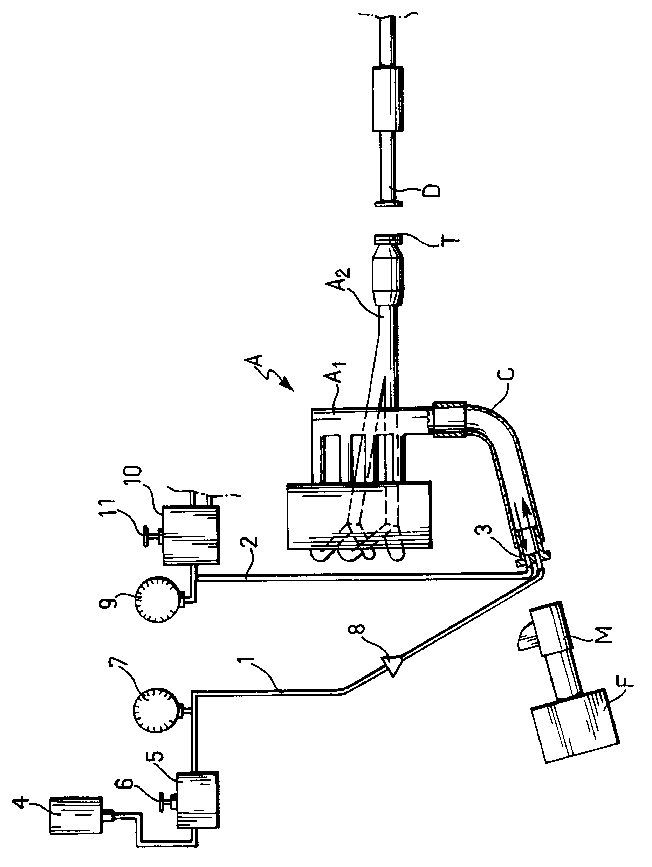

The invention will now be described in detail with reference to the appended drawing provided purely by way of non-limiting example and showing schematically test equipment according to the invention.

With reference to the drawing, the equipment according to the invention comprises essentially an inlet tube 1 and an outlet tube 2 one end of each of which is connected to a common tube connector 3 arranged so that it can be fitted sealingly, in the manner explained below, to the supply-exhaust system A of an internal combustion engine for motor vehicles.

The other end of the inlet tube 1 is connected to a compressed-air source 4 which may be constituted by an industrial pneumatic system, a pneumatic accumulator, or the like.

A pressure regulator 5 is inserted in the inlet tube 1 and is normally calibrated to a pressure corresponding to 2 mH₂O (20 kPa). the calibration pressure of the regulator 5 can be varied selectively between 0 and 10 mH₂O (100 kPa) by means of a manual adjustment member 6.

Downstream of the regulator 5, the inlet tube 1 communicates with a first manometer 7 having a scale indicating from 0 to 10 mH₂O (100 kPa).

A calibrated choke 8 is also inserted in the tube 1 downstream of the manometer 7, and has the function of creating an air flow towards the tube connector 3 of the order of 600-800 litres/hour with a supply pressure of 2 mH₂O (20 kPa). For this purpose, the cross-section of the calibrated choke 8 is of the order of 1.3 mm.

The outlet tube 2 is connected, downstream of the connector 3, to a second manometer 9 which is connected in turn to a second pressure regulator 10. The manometer 9 is provided with a scale graduated from 0 to 1500 mmH₂O (15 kPa), and the regulator 10 is normally calibrated to a pressure such that the pressure of the air admitted to the supply-exhaust system A never exceeds 1500 mmH₂O (15 kPa) with an inlet tube pressure of 10 mH₂O. The equipment is calibrated by short-circuiting the inlet tube 1 and the outlet tube 2. The opening pressure of the regulator 10 can be varied selectively by means of a manual variator 11 and is normally of the order of 800 mmH₂O (8 kPa) for a value of 2 mH₂O (20 kPa) set on the regulator 5.

In use, the tube connector 3 is connected sealingly to the inlet pipe C of the supply-exhaust system A after the latter has been disconnected from the air filter F of the engine. The tube connector 3 is preferably connected to the inlet pipe C in a region situated downstream of the air-flow detector M which is operatively associated with the fuel injection unit of the engine in known manner.

After the connection has been made, the seals in the intake portion A₁ of the system A are tested first. For this purpose, it is necessary to close the valves to isolate the exhaust portion A₂ of the engine, after which the compressed air from the source 4 is admitted to the inlet tube 1. As explained above, the initial supply pressure calibrated by the regulator 5 is of the order of 2 mH₂O (20 kPa). This pressure is detected by the manometer 7.

The compressed air admitted to the inlet tube 1 enters the intake portion A₁ of the system A through the tube connector 3 and the inlet pipe C and is discharged through the outlet tube 2, passing through the tube connector 3 again. The outlet pressure is then detected by the manometer 9 whose scale is graduated in mmH₂O (10 Pa) and enables the air pressure at the outlet to be compared precisely with the air pressure at the inlet.

If the value indicated by the manometer 9 is equal to or not less than a predetermined value relative to the pressure indicated by the manometer 7, the intake portion A₁ of the system A can be considered suitable, that is, without leaks which could alter the operation of the air-flow detector M.

If the opposite is the case, however, the equipment indicates the existence of a leak which must be eliminated.

In order to do this, the leak must be located and this is achieved by increasing, by means of the regulator 5, the pressure of the air admitted to the inlet tube 1. This pressure increase enables any leaks to be located easily since the air escaping through them can be detected immedialtely by sound or touch or by variations indicated on the manometer 9, caused by the blocking of the leak.

Once the leak has been identified and eliminated, a new test is carried out by returning the pressure of the air supplied to the inlet tube 1 to the original calibration value (2 mH₂O (20 kPa)) of the regulator 5.

The same test can then also be made on the exhaust portion A₂ of the supply-exhaust system A by disconnecting the exhaust pipe D and fitting a plug T in the portion thereof connected to the system A. After the valves associated with at least one cylinder of the engine have been simultaneously opened, the testing operations are carried as described above with reference to the supply portion A₁.

## Claims

1. A method of testing the seals and locating leaks in the supply-exhaust system (A) of an internal combustion engine with fuel injection for motor vehicles, having an inlet pipe (C) with an associated air-flow detector (M) operatively associated with the fuel-injection unit of the engine, an exhaust pipe (D), and inlet and exhaust valve means, characterised in that it comprises the following series of steps:
- closing the inlet-exhaust valve means of the engine so as to isolate the exhaust pipe (D),
- admitting compressed air at a first regulated pressure to the inlet pipe (C) through an inlet tube (1),
- detecting the pressure upstream of the inlet pipe (C),
- discharging the compressed air from the inlet pipe (C) by means of an outlet tube (2),
- detecting the discharge pressure and comparing the value detected with that of the first regulated pressure,
- if the discharge pressure detected is less than a value predetermined by calibration, increasing the pressure of the air admitted to the inlet pipe (C) from the first regulated pressure to a second regulated pressure so as to facilitate the identification of the location of the leak,
- eliminating the leak, resetting the first regulated pressure, and again comparing the discharge pressure with the first regulated pressure.

2. A method according to Claim 1, characterised in that it also includes the subsequent steps of opening the inlet and exhaust valve units, sealing the exhaust pipe (D), and repeating the aforesaid series of steps.

3. A method according to Claim 1 or Claim 2, characterised in that the first regulated pressure is of the order of 2 mH₂O.

4. A method according to any one of the preceding claims, characterised in that the pressure downstream of the inlet pipe (C) is limited to a maximum safety value.

5. A method according to Claim 4, characterised in that the maximum safety value is between 800 and 1500 mmH₂O.

6. Equipment for performing the method of one of claims 1-5 for testing seals in a supply-exhaust system (A) of an internal combustion engine with fuel injection for motor vehicles, characterised in that it comprises:
- a compressed-air source (4),
- an inlet tube (1) for sealingly connecting the source (4) to inlet (C) of the supply-exhaust system (A),
- an outlet tube (2) for being sealingly connected to the inlet (C),
- a graduated pressure regulator (5) and a first pressure indicator (7) connected in sequence in the inlet tube (1),
- a second pressure indicator (9) and an adjustable maximum pressure valve (10) connected in sequence in the outlet tube (2).

7. Equipment according to Claim 6, characterised in that it also includes a calibrated choke (8) inserted in the inlet tube (1) downstream of the first pressure indicator (7).

8. Equipment according to Claim 6 or Claim 7, characterised in that the inlet tube (1) and the outlet tube (2) are connected to a common tube connector (3) which can be fitted sealingly to the inlet (C) of the supply-exhaust system (A).

## Patentansprüche

1. Verfahren zum Testen der Dichtungen und Lokalisieren von Lecks in dem Zufuhr-Abgas-System (A) einer Brennkraftmaschine mit Kraftstoffeinspritzung für Kraftfahrzeuge, welche eine der Kraftstoffeinspritzeinheit der Maschine betriebsmäßig zugeordnete Einlaßleitung (C) mit einem zugeordneten Luftströmungs-Detektor (M), eine Abgasleitung (D) und Einlaß- und Abgasventilmittel umfaßt, dadurch gekennzeichnet, daß es die folgende Reihe von Schritten umfaßt:
- Schließen der Einlaß-Abgas-Ventilmittel der Maschine, um die Abgasleitung (D) zu isolieren,
- Zuführen von Druckluft mit einem ersten geregelten Druck durch ein Einlaßrohr (1) in die Einlaßleitung (C),
- Erfassen des Drucks stromaufwärts der Einlaßleitung (C),
- Ablassen der Druckluft aus der Einlaßleitung (C) mittels eines Auslaßrohrs (2),
- Erfassen des Ablaßdrucks und Vergleichen des erfaßten Werts mit jenem des ersten geregelten Drucks,
- falls der erfaßte Auslaßdruck kleiner ist als ein durch Kalibrierung vorbestimmter Wert, Erhöhen des Drucks der in die Einlaßleitung (C) zugeführten Luft von dem ersten geregelten Druck auf einen zweiten geregelten Druck, um die Identifizierung des Orts des Lecks zu erleichtern,
- Beseitigen des Lecks, Wiederherstellen des ersten geregelten Drucks und erneutes Vergleichen des Ablaßdrucks mit dem ersten geregelten Druck.

2. Verfahren nach Anspruch 1, dadurch gekennzeichnet, daß es ferner die aufeinanderfolgenden Schritte umfaßt: Öffnen der Einlaß- und Abgas-Ventileinheiten, Abdichten der Abgasleitung (D) und Wiederholen der vorstehend genannten Reihe von Schritten.

3. Verfahren nach Anspruch 1 oder Anspruch 2, dadurch gekennzeichnet, daß der erste geregelte Druck in der Größenordnung von 2 mH₂O liegt.

4. Verfahren nach einem der vorhergehenden Ansprüche, dadurch gekennzeichnet, daß der Druck stromabwärts der Einlaßleitung (C) auf einen Wert maximaler Sicherheit begrenzt wird.

5. Verfahren nach Anspruch 4, dadurch gekennzeichnet, daß der Wert maximaler Sicherheit zwischen 800 und 1500 mmH₂O liegt.

6. Gerät zur Durchführung des Verfahrens nach einem der Ansprüche 1 bis 5 zum Testen von Dichtungen in einem Zufuhr-Abgas-System (A) einer Brennkraftmaschine mit Kraftstoffeinspritzung für Kraftfahrzeuge, dadurch gekennzeichnet, daß es umfaßt:
- eine Druckluftauelle (4),
- ein Einlaßrohr (1) zum dichtenden Verbinden der Quelle (4) mit einem Einlaß (C) des Zufuhr-Abgas-Systems (A),
- ein Auslaßrohr (2) zum dichtenden Verbirden mit dem Einlaß (C),
- einen Einstelldruckregler (5) und einen ersten Druckanzeiger (7), die in dem Einlaßrohr (1) in Reihe angeordnet sind,
- einen zweiter Druckanzeiger (9) und ein einstellbares Maximaldruckventil (10), die in dem Auslaßrohr (2) in Reihe angeordnet sind.

7. Gerät nach Anspruch 6, dadurch gekennzeichnet, daß es ferner eine kalibrierte Verengung (8) umfaßt, die stromabwärts des ersten Druckanzeigers (7) in das Einlaßrohr (1) eingesetzt ist.

8. Gerät nach Anspruch 6 oder Anspruch 7, dadurch gekennzeichnet, daß das Einlaßrohr (1) und das Auslaßrohr (2) mit einem gemeinsamen Rohrverbindungsstück (3) verbunden sind, das dichtend an den Einlaß (C) des Zufuhr-Abgas-Systems (A) gepaßt werden kann.

## Revendications

1. Procédé pour contrôler les joints étanches et localiser les fuites dans un système d'alimentation-échappement d'un moteur à combustion interne à injection de carburant pour véhicules automobiles, comprenant un tube d'entrée (C) auquel est associé un détecteur de débit d'air (M) combiné fonctionnellement à l'unité d'injection de carburant du moteur, un tube d'échappement (D) et des soupapes d'admission et d'échappement, caractérisé en ce qu'il comprend la série de phases suivantes :
- fermer les soupapes d'admission et d'échappement du moteur de manière à isoler le tube d'échappement (D),
- admettre de l'air comprimé à une première pression réglée dans le tube d'entrée (C) à travers un tube d'entrée (1),
- détecter la pression en amont du tube d'entrée (C),
- évacuer l'air comprimé du tube d'entrée (C) à l'aide d'un tube de sortie (2),
- détecter la pression d'évacuation et comparer la valeur détectée à celle de la première pression réglée,
- si la pression d'évacuation détectée est inférieure à une valeur prédéterminée par étalonnage, augmenter la pression de l'air admis au tube d'entrée (C) pour la faire passer d'une première pression réglée à une deuxième pression réglée de manière à faciliter le repérage de l'emplacement de la fuite,
- éliminer la fuite, rétablir la première pression réglée et comparer de nouveau la pression d'évacuation à la première pression réglée.

2. Procédé selon la revendication 1, caractérisé en ce qu'il comprend en outre les phases suivantes consistant à ouvrir les unités de soupapes d'admission et d'échappement, fermer hermétiquement le tube d'échappement (D) et répéter la succession de phases précitées.

3. Procédé selon la revendication 1 ou la revendication 2, caractérisé en ce que la première pression réglée est de l'ordre de 2 mH₂O.

4. Procédé selon une quelconque des revendications précédentes, caractérisé en ce que la pression en aval du tube d'entrée (C) est limitée à une valeur maximum de sécurité.

5. Procédé selon la revendication 4, caractérisé en ce que la valeur maximum de sécurité est d'entre 800 et 1500 mH₂O.

6. Equipement pour la mise en oeuvre du procédé selon une des revendications 1 à 5 pour le contrôle des joints étanches dans un système d'alimentation-échappement (A) d'un moteur à combustion interne à injection de carburant pour véhicules automobiles caractérisé en ce qu'il comprend :
- une source d'air comprimé (4),
- un tube d'entrée (1) destiné à raccorder la source (4) à joint étanche à l'entrée (C) du système d'alimentation-échappement (A),
- un tube de sortie (2) destiné à être raccordé à l'entrée (C) à joint étanche,
- un régulateur de pression gradué (5) et un premier indicateur de pression (7) intercalés en série dans le tube d'entrée (1),
- un deuxième indicateur de pression (9) et une vanne à pression maximum réglable (10) intercalés en série dans le tube de sortie (2).

7. Equipement selon la revendication 6, caractérisé en ce qu'il comprend aussi un orifice calibré (8) intercalé dans le tube d'entrée (1) en aval du premier indicateur de pression (7).

8. Equipement selon la revendication 6 ou la revendication 7, caractérisé en ce que le tube d'entrée (1) et le tube de sortie (2) sont raccordés à un raccord de tubes commun (3) qui peut être monté à joint étanche sur l'entrée (C) du système d'alimentation-échappement (A).
